# EUROPEAN PATENT APPLICATION

(11) **EP 3 954 264 A1**
(43) Date of publication of application: **16.02.2022**
(21) Application number: 19924032.6
(22) Date of filing: 31.05.2019
(51) Int. Cl.: A47L 9/28, A47L 9/04, A47L 5/28, H02J 50/12, H02J 7/02

(54) **CLEANER AND CHARGING MECHANISM, AND CLEANER PACKAGE COMPRISING SAME**

(30) Priority: 09.04.2019 KR 20190041424
(71) Applicant: LG Electronics Inc., SEOUL 07336 (KR)
(72) Inventor: KIM, Myungsang, Seoul 08592 (KR); YOON, Yoosool, Seoul 08592 (KR); LEE, Cheolyeon, Seoul 08592 (KR); JANG, Hoyong, Seoul 08592 (KR)
(74) Representative: Vossius & Partner Patentanwälte Rechtsanwälte mbB
(86) International application number: PCT/KR2019/006577
(87) International publication number: WO 2020/209440

(57) **Abstract**

A cleaner, according to one embodiment of the present invention, comprises: a cleaner main body comprising a suction motor, a dustbin and a battery; a suction nozzle having formed thereon an opening part for suctioning in external air; and an extension tube for connecting the cleaner main body and the suction nozzle. The suction nozzle comprises: a housing forming the exterior and the opening part of the suction nozzle; a rotational cleaning unit accommodated in the housing and cleaning a surface being cleaned by means of a rotational operation; a motor inserted in one side of the rotational cleaning unit so as to rotate same; a suction nozzle battery for supplying power for driving the motor; and a wireless power receiving unit connected to the suction nozzle battery so as to provide same with power supplied by an external wireless power transmission unit.

## Description

### [Field of Invention]

The present disclosure relates to a cleaner, a charging device thereof, and a cleaner package including the same.

### [Background of Invention]

A cleaner is a device that performs cleaning by absorbing or wiping dust or foreign substances in an area to be cleaned.

The cleaner is classified into a manual cleaner, with which a user performs cleaning while directly moving the cleaner, and an automatic cleaner that performs cleaning while traveling autonomously. The manual cleaner is classified into a canister-type cleaner in which a suction nozzle for absorbing dust is provided separately from a body and is connected thereto through a connector, an upright-type cleaner in which the suction nozzle is rotatably connected to the body, and a hand-type cleaner used in the state in which a user grips the body.

The aforementioned cleaner includes a rechargeable battery built therein, and the rechargeable battery needs to be frequently charged to supply power for an operation of the cleaner. Thus, the cleaner needs a charging stand for holding the cleaner while charging the rechargeable battery. The rechargeable battery is provided in a body of the cleaner.

Meanwhile, an agitator as a rotating brush including a brush attached thereto is installed in a suction nozzle of a conventional vacuum cleaner, and performs cleaning by scraping off dust from the floor or carpet while the agitator rotates.

As the cited reference, Korean Patent Publication No. 10-2018-0030259 discloses a "Cleaner Head for Vacuum Cleaner".

The cleaner head disclosed in the cited reference includes a brush bar included in a chamber and a motor for driving the brush bar. The motor rotates the brush bar, and the brush bar hits a surface to be cleaned while the brush bar rotates. Thus, the brush bar is referred to as a "spinning sweeper". The motor is inserted into the brush bar.

The motor may be operated by receiving power from a power supply of a body. In order to supply power to the motor from the power supply, a terminal is formed on each of a body, a rod, and a head, and a cable is wound inside the rod. That is, in order to supply power to the motor, the plurality of terminals and the cable needs to be provided, and accordingly, there is a problem in that manufacturing difficulty and manufacturing processes increase and the cost of parts also increases.

The power supply needs to supply power to each of the motor of the body and the motor in the cleaner head, and thus power consumption of the power supply increases. Also, when poor contact or damage between terminals occurs, the motor of the cleaner head does not operate smoothly.

### [Summary of Invention]

### [Technical Problem to be Solved]

The objective of the present disclosure is to provide a cleaner including a battery for driving a motor of a cleaner separately from a battery of a body.

The objective of the present disclosure is to provide a cleaner and a charging device for conveniently charging a battery for driving a motor of a cleaner head with power.

### [Technical Solution]

According to an embodiment of the present disclosure, a cleaner includes a suction nozzle battery configured to supply power for driving of a motor inside a suction nozzle, and a wireless power receiver connected to the suction nozzle battery and configured to supply power supplied by an external wireless power transmitter to the suction nozzle battery. That is, the cleaner may include a suction nozzle battery separately from a battery of a cleaner body to increase the driving time of the cleaner, and may wirelessly receive power through a wireless power receiver to charge the suction nozzle battery.

The cleaner may not include a cable or a terminal for power supply between the cleaner body and the suction nozzle in an extension pipe between the cleaner body and the suction nozzle. Thus, a manufacturing process of the cleaner may be simplified, and a problem in that the suction nozzle is not normally driven due to damage to the cable or the terminal.

The suction nozzle may include a driving detection sensor for detecting whether the suction motor of the cleaner body is driven, and thus the motor of the suction nozzle may be automatically driven when the suction motor is driven. Thus, user manipulation for the suction nozzle may not be required, thereby improving user convenience.

According to an embodiment of the present disclosure, a charging device includes a wireless power transmitter configured to supply power to a wireless power receiver included in a suction nozzle of the cleaner when the cleaner is held. Thus, separately from charging of the battery of the cleaner body, a charging function of the suction nozzle battery included in the suction nozzle may be simply provided.

A transmission coil of the wireless power transmitter may be disposed adjacent to or face a reception coil in the suction nozzle when the cleaner is held, thereby maximizing wireless power transmission efficiency.

The charging device may include a holding detection sensor for detecting whether the cleaner is held, and thus power may be supplied to the wireless power transmitter only when holding of the cleaner is detected.

### [Effect of Invention]

According to an embodiment of the present disclosure, a suction nozzle of a cleaner includes a suction nozzle battery for driving of a motor separately from a battery of a cleaner body, thereby increasing the total operation time of the cleaner.

Terminals or cables for power connection between the suction nozzle and the cleaner may be removed, thereby lowering process difficulty and improving process efficiency, and effectively preventing a problem in which the suction nozzle is not normally operated due to damage or failure of the terminal or the cable.

The suction nozzle may include a wireless power receiver for charging the suction nozzle battery, and the charging device may include a wireless power transmitter having a transmitter disposed to face a receiver of the wireless power receiver when the cleaner is held. Thus, the suction nozzle battery is automatically charged when the cleaner is held, and thus inconvenience caused when a user performs an additional operation for charging the suction nozzle battery may be prevented.

### [Brief Description of Drawings]

FIG. 1 is a perspective view of a cleaner according to an embodiment of the present disclosure.
FIG. 2 is a perspective view of a suction nozzle of FIG. 1.
FIG. 3 is an exploded perspective view of the suction nozzle of FIG. 1.
FIG. 4 is an exploded perspective view of a housing of FIG. 3.
FIG. 5 is a diagram showing examples related to arrangement of a wireless power receiver included in a suction nozzle.
FIG. 6 is a perspective view of a charging device of a cleaner according to an embodiment of the present disclosure.
FIG. 7 is a diagram showing the control configuration of a cleaner package including a cleaner and a charging device according to an embodiment of the present disclosure.
FIG. 8 is a diagram showing a wireless power transmitter included in a charging device and a wireless power receiver included in a cleaner in more detail.
FIG. 9 is a diagram for explaining an operation of charging power of a suction nozzle battery as a charging device 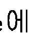 cleaner is held.
FIG. 10 is a diagram for explaining an embodiment in which a body of a cleaner further includes a wireless power receiver.
FIG. 11 is a diagram showing a charging device including a wireless power transmitter corresponding to a wireless power receiver included in a body of a cleaner shown in FIG. 10.

### [Best Mode]

Hereinafter, embodiments disclosed in the specification will be described in detail with reference to the accompanying drawings. It should be understood that the accompanying drawings are only for easy understanding of the embodiments disclosed in the specification, and the technical spirit disclosed in the specification is not limited by the accompanying drawings and includes all changes, equivalents, and substitutes included in the spirit and scope of the present disclosure.

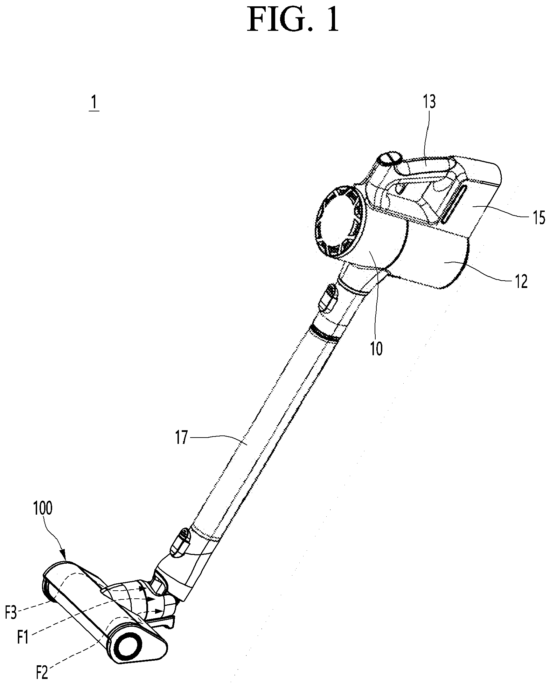

FIG. 1 is a perspective view of a cleaner according to an embodiment of the present disclosure.

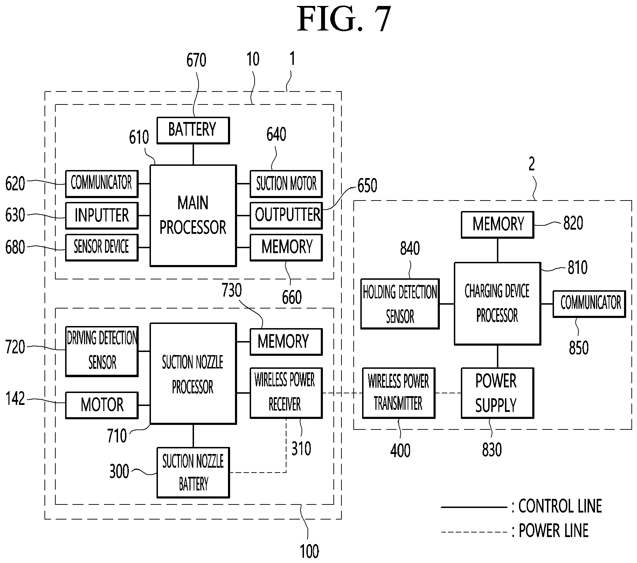

Referring to FIG. 1, a cleaner 1 according to an embodiment of the present disclosure may include a cleaner body 10 including a suction motor 640 (refer to FIG. 7) for generating a suction force, a suction nozzle 100 for absorbing air containing dust, and an extension pipe 17 for connecting the cleaner body 10 and the suction nozzle 100.

Although not shown, the suction nozzle 100 may be connected directly to the cleaner body 10 without the extension pipe 17.

The cleaner body 10 may include a dust container 12 for storing dust separated from the air. Thus, dust introduced through the suction nozzle 100 may be stored in the dust container 12 through the extension pipe 17.

The cleaner body 10 may include a handle 13 to be gripped by a user. The user may perform cleaning in the state of gripping the handle 13.

The cleaner body 10 may include a battery 670 (refer to FIG. 7), and the cleaner body 10 may include a battery accommodation device 15 for accommodating the battery 670 therein. The battery accommodation device 15 may be provided below the handle 13.

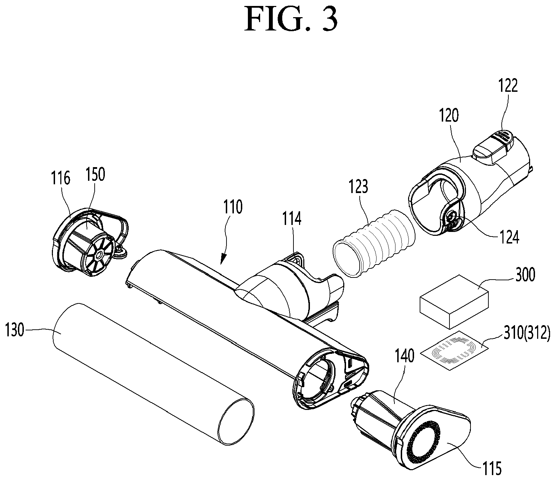

Conventionally, the battery 670 may be connected to the suction nozzle 100 to supply power to the suction nozzle 100. To this end, a terminal and/or a cable for connection between the battery 670 and a driver 140 (refer to FIG. 3) of the suction nozzle 100 may be provided in each of the cleaner body 10, the extension pipe 17, and the suction nozzle 100.

That is, the conventional cleaner has a problem in that manufacturing processes and the cost of parts increase and manufacturing difficulty increases since the terminal and/or the cable are included in each of the cleaner body 10, the extension pipe 17, and the suction nozzle 100. When poor contact or damage between the terminal and/or the cable occurs, the suction nozzle 100 may not operate normally. In addition, the suction motor 640 of the cleaner body 10 and the driver 140 need to be driven by only the battery of the cleaner body 10, and thus there may be a limit to the usage time of the cleaner 1.

To overcome the aforementioned problem, the cleaner 1 according to an embodiment of the present disclosure may further include a separate battery for driving of the driver 140 in the suction nozzle 100. The suction nozzle 100 may include a wireless power receiver for charging the battery using a wireless power transmission method. A charging device 2 of the cleaner 1 may include a wireless power transmitter corresponding to the wireless power receiver. Thus, inconvenience of separately charging the battery by the user may be removed.

Hereinafter, the suction nozzle 100 according to an embodiment of the present disclosure will be described in detail.

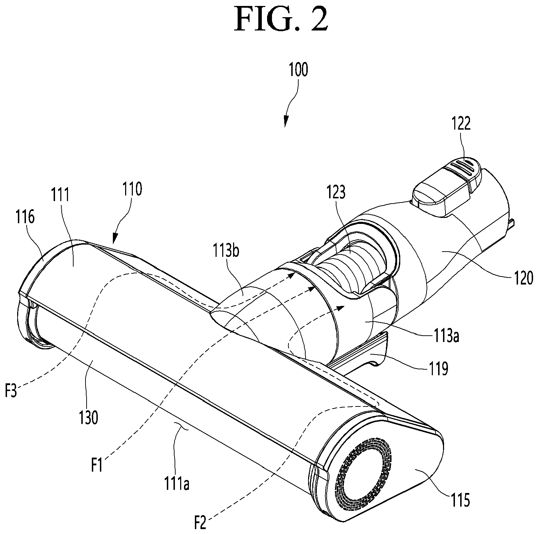

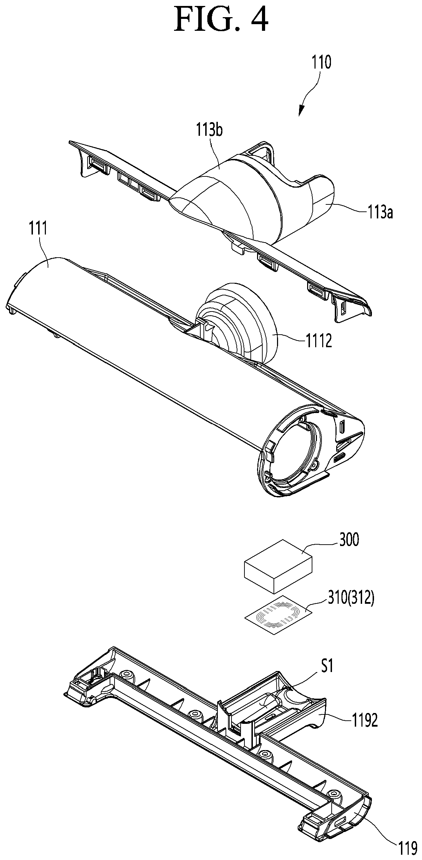

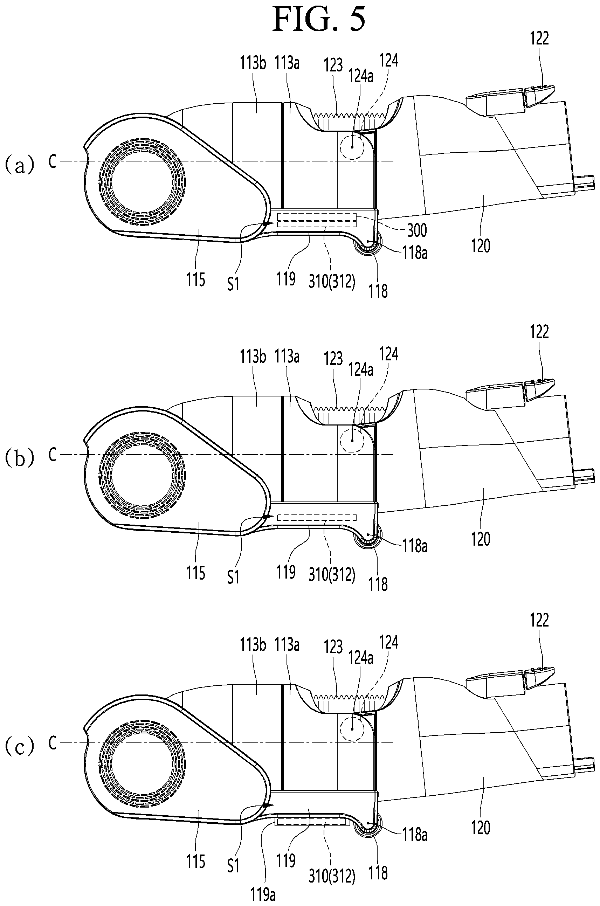

FIG. 2 is a perspective view of a suction nozzle of FIG. 1. FIG. 3 is an exploded perspective view of the suction nozzle of FIG. 1. FIG. 4 is an exploded perspective view of a housing of FIG. 3. FIG. 5 is a diagram showing examples related to arrangement of a wireless power receiver included in a suction nozzle.

Referring to FIGS. 2 to 5, the suction nozzle 100 may include a housing 110, a connection pipe 120, and a spinning sweeper 130.

The housing 110 may include a body 111 formed in a chamber therein. A front opening 111a for absorbing air containing contaminants may be formed in the body 111. By suction force generated from the cleaner body 10, air introduced through the front opening 111a may move to the connection pipe 120 through the chamber.

The front opening 111a may extend in right and left directions of the housing 110 and may extend to a front end of the housing 110 as well as a bottom part of the housing 110. Thus, a suction area may be sufficiently ensured, and thus an area to a part adjacent to a wall surface from the floor may be uniformly cleaned.

The housing 110 may further include an internal pipe 1112 connected to the front opening 111a. By suction force generated by the cleaner body 10, outside air may move to an internal flow passage of the internal pipe 1112 through the front opening 111a.

The housing 110 may further include the driver 140 for providing power for rotating the spinning sweeper 130. The driver 140 may be inserted into one side of the spinning sweeper 130 and may transfer power to the spinning sweeper 130. The driver 140 may include a motor 142 (refer to FIG. 7) for generating driving force. For example, the motor 142 may include a brushless direct current (BLDC) motor.

The body 111 may accommodate the spinning sweeper 130 therein. At least a part of the spinning sweeper 130 may be exposed to the outside through the front opening 111a. The spinning sweeper 130 may be rotated by driving force transferred through the driver 140 and may be rubbed against the surface to be cleansed, thereby shaking off contaminants. An outer circumference of the spinning sweeper 130 may be formed of a fabric such as cotton flannel or a felt material. Accordingly, when the spinning sweeper 130 is rotated, foreign substances such as dust accumulated on the surface to be cleaned may be caught on the outer circumference of the spinning sweeper 130 to be effectively removed.

The body 111 may cover at least a part of an upper side of the spinning sweeper 130. An inner circumference of the body 111 may be formed in a curved shape to correspond to a shape of the outer circumference of the spinning sweeper 130. Thus, the body 111 may perform a function for preventing the foreign substances shaken off from the surface to be cleaned by rotating the spinning sweeper 130.

The housing 110 may further include side covers 115 and 116 for covering both side surfaces of a chamber 112. The side covers 115 and 116 may be installed at both side surfaces of the spinning sweeper 130.

The side covers 115 and 116 may include a first side cover 115 installed at one side of the spinning sweeper 130 and a second side cover 116 installed at the other side of the spinning sweeper 130. The driver 140 may be fixed to the first side cover 115.

The suction nozzle 100 may further include a rotation supporter 150 installed in the second side cover 116 and configured to rotatably support the spinning sweeper 130. The rotation supporter 150 may be inserted into the other side of the spinning sweeper 130 and may rotatably support the spinning sweeper 130.

The spinning sweeper 130 may be rotated to be pushed toward the internal pipe 1112 at a contact point with the surface to be cleaned. Thus, foreign substances shaken off from the surface to be cleaned by the spinning sweeper 130 may move toward the internal pipe 1112 and may be absorbed into the internal pipe 1112 by suction force. The spinning sweeper 130 may be rotated backward based on the contact point with the surface to be cleaned, thereby improving cleaning efficiency.

Hereinafter, flow of air inside the housing 110 will be described.

A plurality of suction flow passages F1, F2, and F3 for moving outside air to an internal pipe of the body 111 may be formed in the body 111 of the suction nozzle 100.

The plurality of suction flow passages F1, F2, and F3 may include a lower flow passage F1 formed below the spinning sweeper 130 and upper flow passages F2 and F3 formed above the spinning sweeper 130.

The lower flow passage F1 may be formed below the spinning sweeper 130. In detail, the lower flow passage F1 may be connected to the internal flow passage of the internal pipe 1112 through a lower side of the spinning sweeper 130 from the front opening 111a.

The upper flow passages F2 and F3 may be formed above the spinning sweeper 130. In detail, the upper flow passages F2 and F3 may be connected to an internal flow passage 1112a through an upper side of the spinning sweeper 130 and a second region 112b inside a first region 112a. Thus, the upper flow passages F2 and F3 may join the lower flow passage F1 in the second region 112b.

The upper flow passages F2 and F3 may include a first upper flow passage F2 formed at one side of the housing 110 and a second upper flow passage F3 formed at the other side of the housing 110. In detail, the first upper flow passage F2 may be disposed adjacent to the first side cover 115, and the second upper flow passage F3 may be disposed adjacent to the second side cover 116.

The housing 110 may include the first upper flow passage F2 installed above the spinning sweeper 130 as well as the lower flow passage F1 installed below the spinning sweeper 130, thereby effectively cooling the driver 140, and may include the second upper flow passage F3, thereby effectively cooling the rotation supporter 150.

The connection pipe 120 may connect the housing 110 and the extension pipe 17 (refer to FIG. 1) to each other. That is, once side of the connection pipe 120 may be connected to the housing 110, and the other side of the connection pipe 120 may be connected to the extension pipe 17.

The connection pipe 120 may include a detach button 122 for manipulating mechanical coupling with the extension pipe 17. The user may manipulate the detach button 122 to couple or decouple the connection pipe 120 and the extension pipe 17.

The connection pipe 120 may be rotatably coupled to the housing 110. In detail, the connection pipe 120 may be rotatably hinged to a first connection member 113a upward and downward.

The housing 110 may include connection members 113a and 113b for being hinged to the connection pipe 120. The connection members 113a and 113b may be formed to surround the internal pipe 1112. The connection members 113a and 113b may include the first connection member 113a and a second connection member 113b that are connected directly to the connection pipe 120. One side of the second connection member 113b may be coupled to the first connection member 113a, and the other side of the second connection member 113b may be coupled to the body 111.

As shown in FIG. 3, a hinge hole 114 may be installed in the first connection member 113a, and a hinge shaft 124 inserted into the hinge hole 114 may be installed at the connection pipe 120. However, unlike in the drawing, a hinge hole may be formed in the connection pipe 120, and a hinge shaft may be formed at the first connection member 113a. The hinge hole 114 and the hinge shaft 124 may be collectively referred to as a "hinge part".

A center 124a of the hinge shaft 124 may be disposed above a central shaft C of the first connection member 113a. Thus, the center of rotation of the connection pipe 120 may be formed above a central shaft of the first connection member 113a.

The first connection member 113a may be rotatably connected to the second connection member 113b. In detail, the first connection member 113a may be rotated using a longitudinal direction as a shaft.

The suction nozzle 100 may further include an auxiliary hose 123 for connecting the connection pipe 120 and the internal pipe 1112 of the housing 110 to each other. Thus, air absorbed into the housing 110 may move to the cleaner body 10 (refer to FIG. 1) through the auxiliary hose 123, the connection pipe 120, and the extension pipe 17 (refer to FIG. 1) .

In order to rotate the connection pipe 120, the auxiliary hose 123 may be formed of a flexible material. The first connection member 113a may be formed in a shape surrounding at least a part of the auxiliary hose 123 in order to protect the same.

The housing 110 may further include a support member 119 installed below the body 111. The support member 119 may support the body 111. Although not shown, a wheel may be rotatably coupled to the support member 119, and may smoothly move the suction nozzle 100 during cleaning.

The support member 119 may include an extension 1192 that extends backward. A rear wheel 118 may be rotatably coupled to the extension 1192. The extension 1192 may support the first connection member 113a and the second connection member 113b from below.

A rotation shaft 118a of the rear wheel 118 may be disposed behind the center 124a of the hinge shaft 124. Thus, the stability of the housing 110 may be improved, thereby preventing the housing 110 from being overturned during cleaning.

Meanwhile, the suction nozzle 100 according to an embodiment of the present disclosure may further include a suction nozzle battery 300 and a wireless power receiver 310.

The suction nozzle battery 300 may be accommodated in a space between the body 111 and the support member 119, but the present disclosure is not limited thereto, and the suction nozzle battery 300 may be accommodated at various positions in the suction nozzle 100 based on a shape of the suction nozzle battery 300.

The suction nozzle battery 300 may supply power for driving of the driver 140. The suction nozzle battery 300 may receive power from the wireless power receiver 310 to be charged with power. That is, as the suction nozzle 100 includes the suction nozzle battery 300, a terminal and/or a cable for electrical connection between the battery of the cleaner body 10 and the driver 140 may be removed, thereby simplifying the manufacturing processes and structure. An abnormal operation of the suction nozzle 100 due to poor contact or damage to the terminal and/or the cable may be prevented.

The wireless power receiver 310 may be disposed below the suction nozzle 100.

In this regard, referring to FIGS. 4 and 5, an accommodation space S1 for accommodating the wireless power receiver 310 (or a receiver 312) therein may be formed between the body 111 and the support member 119 (e.g., the extension 1192).

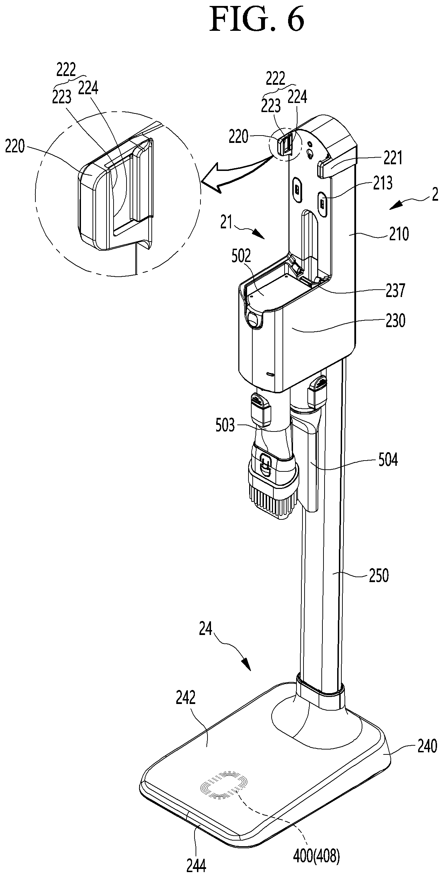

Referring to FIG. 5A, the suction nozzle battery 300 and the wireless power receiver 310 may be accommodated in the accommodation space S1. In particular, the wireless power receiver 310 may be disposed below the suction nozzle battery 300 in the accommodation space S1 between the body 111 and the support member 119. Accordingly, when the cleaner 1 is held on the charging device 2, a distance between the receiver 312 and a transmitter 408 of a wireless power transmitter 400 (refer to FIG. 6) included in the charging device 2 may be minimized, thereby improving wireless power reception efficiency.

Referring to FIG. 5B, only the wireless power receiver 310 may be accommodated in the accommodation space S1. That is, as described above, the suction nozzle battery 300 may be disposed at various positions in the suction nozzle 100 depending on a shape of the suction nozzle battery 300. The wireless power receiver 310 may be electrically connected to the suction nozzle battery 300 through a wire or the like and may supply power provided through the wireless power transmitter 400 to the suction nozzle battery 300.

In some embodiments, referring to FIG. 5C, the wireless power receiver 310 (or the receiver 312 of the wireless power receiver) may also be accommodated in a lower accommodation space 119a formed below the support member 119 or the extension 1192. In this case, the aforementioned distance between the transmitter 408 and the receiver 312 may be further reduced, thereby maximizing wireless power reception efficiency.

The wireless power receiver 310 may receive power using a wireless power transmission method from the wireless power transmitter 400 (refer to FIG. 6) formed in the charging device 2 (refer to FIG. 6). The wireless power receiver 310 may provide the supplied power to the suction nozzle battery 300 to charge the suction nozzle battery 300.

In particular, the wireless power receiver 310 may be formed inside or below the support member 119 or the extension 1192, and thus, when the cleaner 1 is held on the charging device 2, an interval from the wireless power transmitter 400 may be minimized, thereby maximizing power transmission efficiency. Related content of the wireless power receiver 310 will be described below in more detail with reference to FIGS. 7 to 9.

FIG. 6 is a perspective view of a charging device of a cleaner according to an embodiment of the present disclosure.

Referring to FIG. 6, the charging device 2 of the cleaner according to an aspect of the present disclosure may include a charging stand 21 for charging the cleaner 1.

The charging stand 21 may charge a battery included in the cleaner body 10 of the cleaner 1 while supporting the cleaner 1.

The charging stand 21 may include a first body 210.

The first body 210 may include a first charging terminal 213. The first charging terminal 213 may be in contact with the terminal of the cleaner 1 and may charge the battery included in the cleaner body 10.

The charging stand 21 may be connected to the first body 210 and may further include a second body 230 for accommodating an auxiliary battery 502 therein. The auxiliary battery 502 may be detachably connected to the cleaner 1 to supply power for driving the cleaner 1 thereto. As shown in the drawings, the second body 230 may be integrally formed with the first body 210. The second body 230 may include a second charging terminal for charging the auxiliary battery 502.

Charging of the cleaner body 10 by the first charging terminal 213 and charging of the auxiliary battery 502 by the second charging terminal may be independently performed.

In detail, charging of the cleaner 1 and charging of the auxiliary battery 502 may be simultaneously performed, or any one of the cleaner 1 and the auxiliary battery 502 may be performed and then the other one may be charged. For example, after the battery of the cleaner body 10 may be fully charged by the first charging terminal 213, the auxiliary battery 502 may begin to be charged by the second charging terminal.

Extra nozzles 503 and 504 may be coupled to the first body 210. The nozzles 503 and 504 may be detachably installed in the cleaner or the like. In general, the cleaner may include a plurality of changeable suction nozzles according to the use. Thus, a suction nozzle that is not used may have inconvenience to store, but when the nozzles 503 and 504 are stored in the state of being coupled to the first body 210, the risk of loss may be reduced, and ease of use may be improved. The extra nozzles 503 and 504 may be referred to as an "accessory".

The second body 230 may include a supporter 237 for supporting the cleaner body 10. The supporter 237 may be formed parallel to a bottom surface. The cleaner body 10 may be in contact with the first charging terminal 213 in the state of being supported by the supporter 237.

When the cleaner 1 is held above the supporter 237, the auxiliary battery 502 may be shielded not to be viewed from the outside. As shown in the drawings, the supporter 137 may be integrally formed with the second body 230, but the present disclosure is not limited by this feature.

The charging stand 21 may further include a plurality of fixing devices 220 and 221 included in the first body 210. The plurality of fixing devices 220 and 221 may be disposed above the first body 210. The plurality of fixing devices 220 and 221 may be coupled to the cleaner 1 to stably fix the cleaner 1.

In detail, the plurality of fixing devices 220 and 221 may be spaced apart from the first body 210 in a horizontal direction. The cleaner body 10 may be inserted into a space between the plurality of fixing devices 220 and 221 from the above of the plurality of fixing devices 220 and 221.

A fixing groove 222 may be formed in surfaces that face each other in the plurality of fixing devices 220 and 221. The fixing groove 222 may be recessed downward from an upper surface of the plurality of fixing devices 220 and 221 by a predetermined depth.

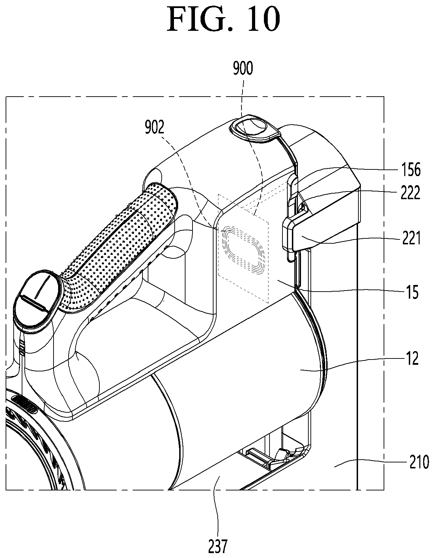

The cleaner body 10 may include a fixing protrusion 156 (refer to FIG. 10) for inserting the same into the fixing groove 222.

The fixing groove 222 may include a first fixing groove 223 and a second fixing groove 224 that are arranged in a line. The first fixing groove 223 may provide an inlet into which the fixing protrusion 156 is inserted, and the width of the inlet may be formed larger than the width of the fixing protrusion 156 to easily insert the fixing protrusion 156. The width of the first fixing groove 223 may be reduced toward the second fixing groove 224. In another aspect, the width of the first fixing groove 223 may be increased toward the inlet from the second fixing groove 224.

The charging device 2 of the cleaner may further include a support device 24 for supporting the charging stand 21.

The support device 24 may include a base 240 accommodate on the bottom surface and a stand 250 included in the base 240. The stand 250 may be detachably coupled to the charging stand 21. The stand 250 may be coupled to the base 240 and may vertically extend upward.

A lower end of the stand 250 may be connected to the base 240, and an upper end of the stand 250 may be connected to the charging stand 21. The upper end of the stand 250 may be vertically coupled to the charging stand 21 from the below of the center of gravity of the charging stand 21. Thus, the stand 250 may stably support the charging stand 21.

The base 240 may include an inclined surface 242 on which a suction nozzle 100 of the cleaner 1 is held, and a stopper 244 for preventing separation of the suction nozzle 100 of the cleaner 1. In some embodiments, the suction nozzle 100 may be positioned adjacent to an upper surface of the base 240 within a predetermined distance when the cleaner 1 is held.

The stopper 244 may protrude from an end of the inclined surface 242. The stopper 244 may support the suction nozzle 100 to maintain the state in which the suction nozzle 100 is stably accommodated on the base 240.

The wireless power transmitter 400 may be installed inside the base 240. The transmitter 408 (e.g., a transmission coil) of the wireless power transmitter 400 may supply power to the receiver 312 included in the suction nozzle 100 when the cleaner 1 is held, and thus may charge the suction nozzle battery 300 accommodated in the suction nozzle 100.

The transmitter 408 may be installed inside the base 240 to have the distance from the upper surface of the base 240, which is within a predetermined distance, in order to maintain wireless power transmission efficiency to the receiver 312 to be predetermined efficiency or greater.

In some embodiments, the transmitter 408 may be disposed on a surface of the base 240. In this case, the transmitter 408 may be disposed adjacent to the receiver 312 compared with the case in which the transmitter 408 is installed inside the base 240, thereby maximizing wireless power transmission efficiency. A user may easily recognize the position of the transmitter 408 with the naked eyes, and thus when the cleaner 1 is held, the position of the suction nozzle 100 may be adjusted to maximize wireless power transmission efficiency.

The transmitter 408 may be disposed at a position that faces the receiver 312 based on upward and downward directions when the cleaner 1 is held, thereby maximizing wireless power transmission efficiency. In order to further maximize the wireless power transmission efficiency, the transmitter 408 may be disposed parallel to the receiver 312 when the cleaner 1 is held.

Related content of the wireless power transmitter 400 will be described below in more detail with reference to FIGS. 7 to 9.

FIG. 7 is a diagram showing the control configuration of a cleaner package including a cleaner and a charging device according to an embodiment of the present disclosure.

Referring to FIG. 7, the cleaner body 10 of the cleaner 1 may include a main processor 610, a communicator 620, an inputter 630, the suction motor 640, an outputter 650, a memory 660, and the battery 670. The components shown in FIG. 7 are not required to implement the cleaner 1, and thus the cleaner may include greater or fewer components.

The main processor 610 may control the overall operation of components of the cleaner body 10. The main processor 610 may refer to a controller that collectively includes at least one controller and/or at least one processor.

In terms of hardware, the main processor 610 may be embodied as at least one CPU, an application processor (AP), a microcomputer, an application specific integrated circuit (ASIC), an integrated circuit, or the like.

The communicator 620 may include at least one communication device for connecting the cleaner 1 to a server, a terminal of a user, the charging device 2, or the like. For example, the communicator 620 may a short-distance communication device using Bluetooth or near field communication (NFC), a wireless Internet device using Wi-Fi, or a mobile communication device.

The main processor 610 may transmit state information or operation information of the cleaner to the server or the terminal through the communicator 620. The main processor 610 may receive control information of the cleaner from the server or the terminal through the communicator 620.

In some embodiments, the cleaner body 10 may be connected to a communicator 850 of the charging device 2 through the communicator 620 to transmit state information or operation information of the cleaner 1 to the charging device 2 or to receive state information or operation information of the charging device 2 from the charging device 2.

In some embodiments, when the suction nozzle 100 includes a communication device (not shown), the main processor 610 may also transmit a control signal for driving the motor 142 to the suction nozzle 100 upon receiving a driving request of the cleaner 1 through the inputter 630.

The inputter 630 may include at least one input device for inputting a predetermined request or command to the cleaner 1 by user manipulation. For example, the at least one input device may include a button, a dial, a touchpad, a microphone, or the like. The request or command may include a power on/off command, a command for adjusting the intensity of the suction motor 640, and a command for setting/changing an operation mode of the cleaner 1. The main processor 610 may control the suction motor 640 or the like based on request or the command. According to an operation of the suction motor 640, foreign substances or dust on the floor may be absorbed into the cleaner body 10. The absorbed foreign substances or dust may be accommodated in the dust container 12.

The suction motor 640 may generate suction force when the cleaner 1 is driven. By the suction force, outside air may be introduced into the cleaner body 10 through the suction nozzle 100 and the extension pipe 17.

The outputter 650 may include an output device for notifying a user about various pieces of information (an operation mode, an adsorption mode, etc.) related to an operation of the cleaner 1. For example, the outputter 650 may include a speaker or a buzzer as an audio output device, and may include a display or a light outputter as a graphic or text output device.

The memory 660 may store various data including control data for control of an operation of the cleaner body 10, data or algorithms for processing a request or a command input through the inputter 630, and data for determining whether error occurs in the cleaner 1. The memory 660 may include at least one volatile memory and/or at least one non-volatile memory.

The battery 670 may supply power for an operation to each of components included in the cleaner body 10. In some embodiments, the cleaner body 10 may also include a cable connected to an external power supply source instead of the battery 670.

In some embodiments, the cleaner body 10 may include sensor device 680 having at least one sensor for detecting the internal state or interior environment of the cleaner 1. For example, the sensor device 680 may include a sensor for sensing the amount of dust or foreign substances accommodated in the dust container 12, and a sensor for sensing environment information (the concentration of dust) of the interior environment in which the cleaner 1 is disposed.

Referring to FIG. 7, the suction nozzle 100 may include a suction nozzle processor 710, a driving detection sensor 720, a memory 730, the motor 142, the suction nozzle battery 300, and a wireless power receiver 310.

The suction nozzle processor 710 may control the overall operation of components included in the suction nozzle 100. The suction nozzle processor 710 may include at least one controller and/or a processor, similarly to the main processor 610.

The driving detection sensor 720 may include at least one sensor for detecting beginning of cleaning using the cleaner 1.

Unlike the conventional cleaner 1, a cable or an electric wire between the cleaner body 10 and the suction nozzle 100 may be removed from the cleaner 1 according to an embodiment of the present disclosure. In this case, the cleaner body 10 and the suction nozzle 100 may be separately driven. For example, each of the cleaner body 10 and the suction nozzle 100 may include an inputter such as a switch, but the user may be inconvenienced.

Thus, the cleaner 1 according to an embodiment of the present disclosure may include the driving detection sensor 720 in the suction nozzle 100, thereby preventing user inconvenience.

For example, the driving detection sensor 720 may include an acceleration sensor for detecting an acceleration change that occurs when the cleaner 1 moves in order for the user to use the cleaner 1. The suction nozzle processor 710 may detect use of the cleaner 1 based on the acceleration change of the acceleration sensor and may drive the motor 142 according to the detection result.

The driving detection sensor 720 may include various sensors including a proximity sensor for detecting proximity to the ground, a pressure sensor for detecting pressure, a microphone for detecting sound generated when the suction motor 640 is driven, and a vibration sensor for detecting vibration generated when the suction motor 640 is driven.

That is, the suction nozzle processor 710 may control automatically driving of the motor 142 without separate user manipulation based on the detection result of the driving detection sensor 720 including the various sensors, thereby preventing user inconvenience.

In some embodiments, the suction nozzle 100 may include a communication device connected to the communicator 620 of the cleaner body 10. In this case, the suction nozzle processor 710 may control driving of the motor 142 based on a control signal received from the main processor 610. In this case, the driving detection sensor 720 may not be included.

The memory 730 may store control data for control of an operation of the suction nozzle 100, algorithms or reference data for detecting whether the cleaner 1 is used based on a sensing value of the driving detection sensor 720, and the like.

The suction nozzle battery 300 may supply power for an operation to each of components included in the suction nozzle 100. The suction nozzle battery 300 may be connected to the wireless power receiver 310 and may receive power from the wireless power receiver 310 to be charged.

Referring to FIG. 7, the charging device 2 may include a charging device processor 810, a memory 820, a power supply 830, a holding detection sensor 840, the communicator 850, and a wireless power transmitter 400.

The charging device processor 810 may control the overall operation of components included in the charging device 2. The charging device processor 810 may include at least one controller and/or a processor, similarly to the main processor 610.

The memory 820 may store control data for control of an operation of the charging device 2, algorithms or reference data for detecting whether the cleaner 1 is held based on a sensing value of the holding detection sensor 840, and the like.

The power supply 830 may be connected to an external power supply line and may provide power supplied from the outside to the battery 670 of the cleaner body 10. In detail, the power supply 830 may provide the power to the battery 670 of the cleaner body 10 as the first charging terminal 213 and the terminal of the cleaner 1 are in contact with each other.

Upon detecting that the cleaner 1 is held on the charging device 2, the charging device processor 810 according to an embodiment of the present disclosure may control the power supply 830 to provide power to the wireless power transmitter 400 connected to the power supply 830. Accordingly, even if the cleaner 1 is not held, unnecessary power consumption due to power supply to the wireless power transmitter 400 may be prevented.

According to control of the charging device processor 810, power may be supplied to the wireless power receiver 310 in the suction nozzle 100 through the wireless power transmitter 400. The suction nozzle 100 may charge the suction nozzle battery 300 with the received power. The suction nozzle 100 may drive components including the motor 142 using power charged in the suction nozzle battery 300.

The charging device 2 may further include the holding detection sensor 840 for detecting whether the cleaner 1 is held.

For example, the holding detection sensor 840 may be embodied as a current sensor for detecting current supplied to the cleaner body 10 through the first charging terminal 213. When the cleaner 1 is held on the charging device 2, the first charging terminal 213 and the cleaner 1 may become in contact with the terminal, and power may be supplied to the battery 670 of the cleaner 1 through the first charging terminal 213. In this case, the current sensor may sense a current change due to power supply to the battery 670. The charging device processor 810 may recognize that the cleaner 1 is held on the charging device 2 based on a sensing value of the current sensor and may control the power supply 830 to supply current to the wireless power transmitter 400. For example, the charging device processor 810 may control the power supply 830 to supply power to the wireless power transmitter 400 for a predetermined time based on the full charge time of the suction nozzle battery 300 .

In some embodiments, the holding detection sensor 840 may be implemented as various sensors for detecting whether the cleaner 1 is held on the charging device 2, for example, a proximity sensor or a contact sensor that detects proximity or contact of the cleaner body 10 or the suction nozzle 100, or a weight sensor for detecting a weight change as the cleaner 1 is held.

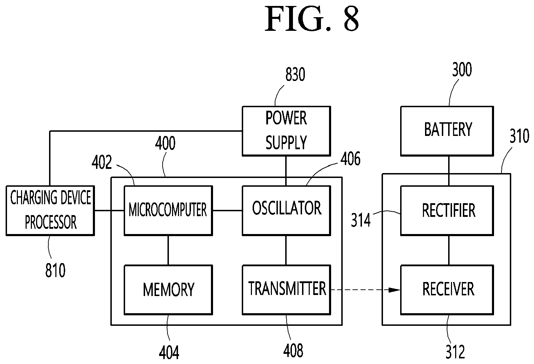

Hereinafter, the wireless power transmitter 400 included in the charging device 2 and the wireless power receiver 310 included in the suction nozzle 100 will be described in more detail with reference to FIG. 8.

FIG. 8 is a diagram showing a wireless power transmitter included in a charging device and a wireless power receiver included in a cleaner in more detail.

The wireless power transmitter 400 and the wireless power receiver 310 may transmit and receive power using various wireless power transmission methods such as a magnetic induction method or a magnetic resonance method.

The magnetic induction method may be a method using an electromagnetic induction phenomenon whereby a voltage is induced and current flows when a magnetic field is changed around a conductor through which electricity flows.

In the magnetic resonance method, when a transmitter and a receiver resonate at the same frequency, power may be transmitted using wireless power transmission of moving electromagnetic waves from the transmitter to the receiver through an electromagnetic field. A transmission coil of the transmitter may have a predetermined resonant frequency, and as power is supplied, electromagnetic waves and magnetic fields may be generated. In this case, inductive power may be generated by a magnetic field in a reception coil of the receiver.

That is, in the specification, when power is transmitted to the wireless power receiver 310 from the wireless power transmitter 400, this means that inductive power is generated in the receiver 312 included in the wireless power receiver 310 of the suction nozzle 100 by a magnetic field generated in the transmitter 408 of the wireless power transmitter 400.

Referring to FIG. 8, the wireless power transmitter 400 may include a microcomputer 402, a memory 404, an oscillator 406, and the transmitter 408.

The microcomputer 402 may control the overall operation of the wireless power transmitter 400. For example, the microcomputer 402 may receive a control command for transmission of power from the charging device processor 810 and may control the oscillator 406 according to the received control command, and may transmit power to the wireless power receiver 310.

The memory 404 may store control data related to an operation of components included in the wireless power transmitter 400.

The oscillator 406 may provide alternating current (AC) power to the transmitter 408 according to control of the microcomputer 402. For example, the oscillator 406 may control a frequency of the power provided to the transmitter 408 to a resonant frequency, thereby maximizing efficiency of power supply.

The transmitter 408 may supply power to the wireless power receiver 310 based on the AC power provided by the oscillator 406. For example, the transmitter 408 may include a transmission coil for generating a magnetic field when the AC power is provided, but the present disclosure is not limited thereto.

The wireless power transmitter 400 may include only the oscillator 406 and the transmitter 408. In this case, the overall operation of the wireless power transmitter 400 may be controlled by the charging device processor 810. Control data related to the operation of the wireless power transmitter 400 may be stored in the memory 820.

The wireless power receiver 310 may include the receiver 312 and a rectifier 314. As described above, the wireless power receiver 310 may be included in the suction nozzle 100.

When AC power corresponding to power received through the receiver 312 is rectified by the rectifier 314, the suction nozzle processor 710 of the suction nozzle 100 may control to store the rectified power in the suction nozzle battery 300. Upon detecting that driving of the cleaner 1 begins by the driving detection sensor 720 or the like, the suction nozzle processor 710 may control to supply power stored in the suction nozzle battery 300 to the motor 142.

The receiver 312 may receive power from the transmitter 408. For example, the receiver 312 may include a reception coil for generating inductive power based on the magnetic field generated by the transmitter 408, but the present disclosure is not limited thereto.

The rectifier 314 may rectify AC power corresponding to inductive power generated from the receiver 312. The power rectified by the rectifier 314 may be stored in the suction nozzle battery 300.

That is, the cleaner according to an embodiment of the present disclosure may include the wireless power transmitter 400 and the wireless power receiver 310, and thus power may be wirelessly supplied to the suction nozzle battery 300 of the suction nozzle 100. That is, a terminal, a cable, or the like between the suction nozzle 100 and the cleaner body 10 may be removed, thereby improving convenience in manufacturing. A problem in which the suction nozzle 100 is not normally operated due to damage or failure of the terminal or the cable may be effectively prevented.

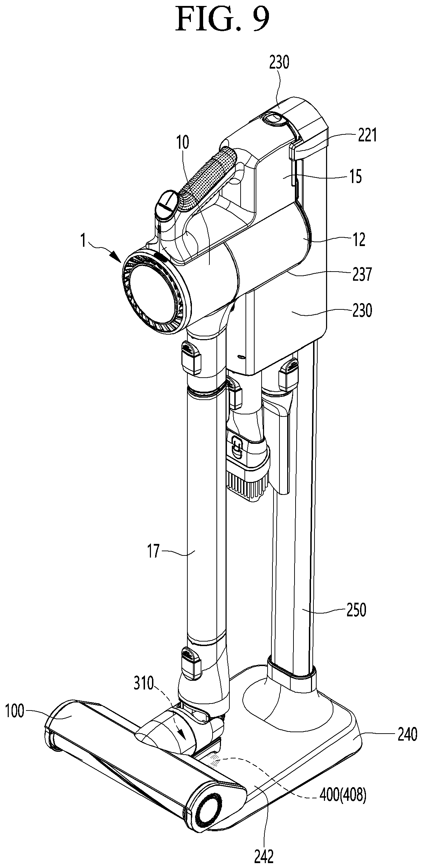

FIG. 9 is a diagram for explaining an operation of charging power of a suction nozzle battery as a charging device 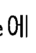 cleaner is held.

Referring to FIG. 9, in order to hold the cleaner 1 on the charging device 2, a user or the like may lift the cleaner 1 and may position the cleaner 1 above the charging device 2. The user or the like may align the fixing protrusion 156 of the cleaner body 10 with the fixing groove 222 of the fixing devices 220 and 221.

In this state, when the cleaner body 10 is moved downward, the fixing protrusion 156 may be inserted into the fixing groove 222 of each of the fixing devices 220 and 221. In a procedure of inserting the fixing protrusion 156 into the fixing groove 222, the cleaner body 10 may be accommodated on the supporter 237.

In the state in which the cleaner body 10 is accommodated on the supporter 237, the cleaner body 10 may be in contact with the first charging terminal 213. In detail, a terminal (not shown) formed on the cleaner body 10 may be in contact with the first charging terminal 213, and in this case, the battery 670 in the cleaner body 10 may be charged with power supplied through the first charging terminal 213 of the charging device 2.

When the cleaner body 10 is accommodated on the supporter 237, the suction nozzle 100 may be held on the inclined surface 242 of the base 240. In this case, the receiver 312 (e.g., a reception coil) included in the wireless power receiver 310 of the suction nozzle 100 may be positioned above the transmitter 408 (e.g., a transmission coil) disposed in the base 240.

As the cleaner body 10 is accommodated on the supporter 237, the charging device processor 810 may detect holding of the cleaner 1 based on a sensing value of the holding detection sensor 840.

As holding of the cleaner 1 is detected, the charging device processor 810 may control the power supply 830 to supply power to the wireless power transmitter 400. The transmitter 408 of the wireless power transmitter 400 may generate a magnetic field based on power provided from the power supply 830. The receiver 312 included in the wireless power receiver 310 of the suction nozzle 100 may generate inductive power based on the magnetic field to receive power. In particular, the receiver 312 may be disposed above the transmitter 408 to face the same, thereby maximizing generation efficiency of inductive power.

The inductive power generated by the receiver 312 may be provided to the suction nozzle battery 300, and thus may charge the suction nozzle battery 300.

That is, according to an embodiment of the present disclosure, the suction nozzle 100 includes the suction nozzle battery 300 for driving of the motor 142 separately from the battery 670 of the cleaner body 10, thereby increasing the total operation time of the cleaner 1. Terminals or cables for power connection between the suction nozzle 100 and the cleaner body 10 may be removed, thereby lowering process difficulty and improving process efficiency.

The suction nozzle 100 may include the wireless power receiver 310 for charging the suction nozzle battery 300, and the charging device 2 may include the wireless power transmitter 400 having the transmitter 408 disposed to face the receiver 312 of the wireless power receiver 310 when the cleaner 1 is held. Thus, the suction nozzle battery 300 is automatically charged when the cleaner 1 is held, and thus inconvenience caused when a user performs an additional operation for charging the suction nozzle battery 300 may be prevented.

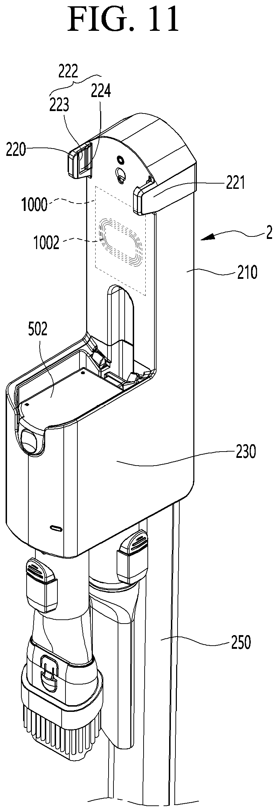

FIG. 10 is a diagram for explaining an embodiment in which a body of a cleaner further includes a wireless power receiver. FIG. 11 is a diagram showing a charging device including a wireless power transmitter corresponding to a wireless power receiver included in a body of a cleaner shown in FIG. 10.

Referring to FIG. 10, the cleaner body 10 may include a wireless power receiver 900 for charging the battery 670.

A receiver 902 of the wireless power receiver 900 may be disposed in the battery accommodation device 15. For example, the receiver 902 may be disposed adjacent to a surface of the battery accommodation device 15, which is in contact with the first body 210 of the charging device 2 when the cleaner 1 is held. The receiver 902 may be disposed to face the first body 210.

Referring to FIG. 11, the first body 210 of the charging device 2 may not include the first charging terminal 213 (refer to FIG. 6). Instead, the first body 210 may include a wireless power transmitter 1000 for supplying power to the wireless power receiver 900.

For example, a transmitter 1002 of the wireless power transmitter 1000 may be disposed adjacent to a surface of the cleaner 1, which is in contact with the battery accommodation device 15 when the cleaner 1 is held. The transmitter 1002 may be disposed to face the receiver 902 forward and backward.

When the cleaner 1 is held on the charging device 2, the charging device processor 810 may detect holding of the cleaner 1 using the holding detection sensor 840. According to the detection result, the charging device processor 810 may control the power supply 830 to supply power to the wireless power transmitter 1000. The charging device processor 810 may control the power supply 830 to supply power to the wireless power transmitter 400 described above with reference to FIG. 7.

As power is supplied to the wireless power transmitters 400 and 1000, power may be generated in each of the wireless power receiver 310 included in the suction nozzle 100 and the wireless power receiver 900 included in the battery accommodation device 15. Each of the suction nozzle battery 300 and the battery 670 of the cleaner body 10 may be charged with the generated power.

That is, according to the embodiment shown in FIGS. 10 to 11, the cleaner 1 and the charging device 2 may be configured to charge the battery 670 of the cleaner body 10 using a wireless power transmission method. Thus, a charging terminal of each of the cleaner 1 and the charging device 2 may be removed, thereby preventing abnormal charging due to contact failure of the charging terminal or the like. As the charging terminal is removed, the outer appearance of the cleaner 1 and the charging device 2 may become clean, and failure or performance degradation when foreign substances penetrate into the cleaner 1 and the charging device 2 through the charging terminal may be prevented.

The above description is merely illustrative of the technical spirit of the present disclosure, and various modifications and variations may be made without departing from the essential characteristics of the present disclosure by those skilled in the art to which the present disclosure pertains.

Therefore, the embodiments disclosed in the present disclosure are not intended to limit the technical spirit of the present disclosure, but to explain the technical spirit, and the scope of the technical spirit of the present disclosure is not limited by these embodiments.

The scope of the present disclosure should be construed by the following claims, and all technical spirits within the scope equivalent thereto should be construed as being included in the scope of the present disclosure.

## Claims

1. A cleaner comprising:
a cleaner body including a suction motor, a dust container, and a battery;
a suction nozzle including an opening formed therein and absorbing outside air; and
an extension pipe configured to connect the cleaner body and the suction nozzle,
wherein the suction nozzle includes:
a housing forming an outer appearance of the suction nozzle and the opening;
a spinning sweeper accommodated in the housing and cleaning a surface to be cleaned by a rotation operation;
a motor inserted into one side of the spinning sweeper and configured to rotate the spinning sweeper;
a suction nozzle battery configured to supply power for driving of the motor; and
a wireless power receiver connected to the suction nozzle battery and configured to supply power supplied by an external wireless power transmitter to the suction nozzle battery.

2. The cleaner of claim 1, wherein the extension pipe does not include a cable for power supply between the cleaner body and the suction nozzle.

3. The cleaner of claim 1, wherein the suction nozzle includes:
a driving detection sensor configured to acquire a sensing value for detecting whether the suction motor is driven; and
a suction nozzle processor configured to detect whether the suction motor is driven based on the sensing value, and to drive the motor included in the suction nozzle when driving of the suction motor is detected.

4. The cleaner of claim 3, wherein the driving detection sensor includes at least one of:
an acceleration sensor configured to detect an acceleration change that occurs when the cleaner moves;
a proximity sensor configured to detect proximity to a ground;
a microphone configured to detect sound generated when the suction motor is driven; or
a vibration sensor configured to detect vibration generated when the suction motor is driven.

5. The cleaner of claim 1, wherein:
the suction nozzle further includes a support member installed below the housing, and
the suction nozzle battery and the wireless power receiver are accommodated in a space between the housing and the support member.

6. The cleaner of claim 5, wherein the wireless power receiver includes a reception coil disposed below the suction nozzle battery.

7. A charging device comprising:
a charging stand including a charging terminal configured to charge a battery of a cleaner body;
a base accommodated on a bottom surface;
a stand coupled between the charging stand and the base and configured to support the charging stand; and
a wireless power transmitter disposed inside the base.

8. The charging device of claim 7, wherein the wireless power transmitter includes a transmission coil disposed to be directed upward inside the base.

9. The charging device of claim 8, wherein the transmission coil is disposed adjacent to an upper surface of the base inside the base.

10. The charging device of claim 8, wherein the base includes:
an inclined surface on which a suction nozzle of a cleaner is held; and
a stopper configured to prevent separation of the suction nozzle,
wherein the transmission coil is disposed inside the base to face a reception coil included in the suction nozzle based on upward and downward directions when the suction nozzle is held.

11. The charging device of claim 7, further comprising:
a power supply connected to the wireless power transmitter;
a holding detection sensor configured to acquire a sensing value for detecting whether the cleaner is held; and
a charging device processor configured to detect whether the cleaner is held based on the sensing value, and to control the power supply to supply power to the wireless power transmitter when holding of the cleaner is detected.

12. The charging device of claim 11, wherein the holding detection sensor includes a current sensor configured to detect current supplied to the cleaner body through the charging terminal.

13. A cleaner package comprising:
a cleaner including a cleaner body including a suction motor, a dust container, and a battery, and a suction nozzle including a spinning sweeper configured to clean a surface to be cleaned by a rotation operation, a motor configured to rotate the spinning sweeper, a suction nozzle battery configured to supply power for driving of the motor, and a wireless power receiver connected to the suction nozzle battery; and
a charging device including a charging stand configured to support the cleaner and including a charging terminal configured to charge a battery of the cleaner body, a base configured to support the charging stand, and a wireless power transmitter formed in the base.

14. The cleaner package of claim 13, wherein:
when the cleaner is held on the charging device, the suction nozzle is accommodated on an upper surface of the base or is disposed adjacent to the upper surface of the base within a predetermined distance;
the wireless power receiver includes a reception coil disposed adjacent to a bottom surface of the suction nozzle inside the suction nozzle; and
the wireless power transmitter includes a transmission coil disposed adjacent to the upper surface of the base inside the base.

15. The cleaner package of claim 13, wherein:
when the cleaner is held on the charging device, the suction nozzle is accommodated on an upper surface of the base or is disposed adjacent to the upper surface of the base within a predetermined distance,
the wireless power receiver includes a reception coil disposed inside the suction nozzle, and
the wireless power transmitter includes a transmission coil disposed inside the base to face the reception coil based on upward and downward directions.

16. The cleaner package of claim 13, wherein the charging device further includes:
a power supply connected to the wireless power transmitter;
a holding detection sensor configured to acquire a sensing value for detecting whether the cleaner is held; and
a charging device processor configured to detect whether the cleaner is held based on the sensing value, and to control the power supply to supply power to the wireless power transmitter when holding of the cleaner is detected.

17. The cleaner package of claim 16, wherein the holding detection sensor includes a current sensor configured to detect current supplied to the cleaner body through the charging terminal.

18. The cleaner package of claim 13, wherein the suction nozzle includes:
a driving detection sensor configured to acquire a sensing value for detecting whether the suction motor is driven; and
a suction nozzle processor configured to detect whether the suction motor is driven based on the sensing value, and to drive the motor when driving of the suction motor is detected.

19. The cleaner package of claim 18, wherein the driving detection sensor includes at least one of:
an acceleration sensor configured to detect an acceleration change that occurs when the cleaner moves;
a proximity sensor configured to detect proximity to a ground;
a microphone configured to detect sound generated when the suction motor is driven; or
a vibration sensor configured to detect vibration generated when the suction motor is driven.
